# FASCICULE DE BREVET EUROPEEN

(11) **EP 3 774 503 B1**
(45) Date de publication et mention de la délivrance du brevet: **11.09.2024**
(21) Numéro de dépôt: 19713382.0
(22) Date de dépôt: 15.03.2019
(51) Int. Cl.: B62D 25/08, B62D 65/02

(54) **MÉTHODE DE MONTAGE D'UN ÉLÉMENT STRUCTUREL AVANT DE CAISSE DE CARROSSERIE**
VERFAHREN ZUR MONTAGE EINES VORDEREN STRUKTURELEMENTS EINER ROHKAROSSERIE
METHOD FOR MOUNTING A FRONT STRUCTURAL ELEMENT OF A BODY SHELL

(30) Priorité: 03.04.2018 FR 1852860
(43) Date de publication de la demande: 17.02.2021
(73) Titulaire: Renault s.a.s, 92100 Boulogne Billancourt (FR)
(72) Inventeur: CARRIE, Julien, 78000 VERSAILLES (FR); GIRAULT, Edouard, 27810 MARCILLY sur Eure (FR)
(74) Mandataire: Renault Group
(86) Numéro de dépôt international: PCT/EP2019/056587
(87) Numéro de publication internationale: WO 2019/192824

(56) Documents cités:
- EP-A2- 1 880 784
- EP-B1- 1 912 850
- FR-B1- 3 010 966
- US-A1- 2016 264 176

## Description

La présente invention se rapporte à une méthode de montage d'un élément structurel avant de caisse de carrosserie de véhicule automobile.

L'élément structurel visé comporte un sommet formant coupelle. Il comporte également une bordure latérale interne et une bordure latérale externe, laquelle est surélevée par rapport à la bordure latérale interne.

Les caisses de carrosserie de véhicule automobile sont réalisées en acier et elles comportent un compartiment moteur situé à l'avant du véhicule, lequel compartiment moteur est délimité transversalement d'un habitacle par un tablier. Aussi, le compartiment moteur est délimité latéralement par deux ailes latérales opposées.

Les caisses de carrosserie comportent également deux longerons s'étendant longitudinalement depuis le tablier, à l'intérieur du compartiment moteur et respectivement au voisinage des deux ailes opposées.

Aussi, les caisses de carrosserie sont équipées de deux éléments structurels opposés venant s'appuyer, latéralement, respectivement sur les ailes et les longerons correspondant et postérieurement sur le tablier. Plus précisément, les deux éléments structurels viennent s'appliquer au dessus des passages de roues avant des véhicules automobiles, de manière à recevoir les suspensions.

Usuellement, les éléments structurels sont réalisés en acier, et pour les fixer à la caisse de carrosserie, on les adosse au tablier, tandis qu'on soude respectivement ensemble, les bordures latérales externes avec les ailes avant correspondantes et les bordures latérales internes respectivement avec les longerons correspondant.

Les soudures acier sur acier sont réalisées au moyen de robots installés le long des chaînes de montage des véhicules, et des pinces de soudage qu'ils portent.

Dans le but d'alléger les caisses de carrosserie, il a été imaginé d'installer des éléments structurels en alliage d'aluminium. Partant, ils ne peuvent plus être soudés avec les moyens usuels. On a alors recours à des rivets auto-poinçonneur et également à de la colle.

Par conséquent, une telle modification de la méthode de montage des éléments structurels, nécessite une adaptation coûteuse de l'environnement des chaînes de montage. On pourra se référer au document EP1880784.

Aussi, un problème qui se pose et que vise à résoudre la présente invention est de fournir une méthode de montage qui permette de s'affranchir d'au moins une partie des surcoûts engendrés par la mise en oeuvre d'éléments structurels en alliage d'aluminium dans les caisses de carrosserie en acier.

Dans ce but, et selon un premier aspect de l'invention, il est proposé une méthode de montage d'élément structurel selon la revendication 1.

Ainsi, une caractéristique de l'invention réside dans la mise en oeuvre d'au moins une pièce de montage latérale externe en acier que l'on solidarise, préalablement à l'installation de l'élément structurel, à la bordure latérale externe de ce dernier. De la sorte, l'élément structurel peut être monté sur la caisse de carrosserie et soudé avec les moyens usuels de type, pince de soudage par exemple. En effet, la pièce de montage latérale externe en acier vient s'appliquer contre la paroi interne de l'aile avant du véhicule, elle-même en acier, et elle peut alors y être soudée. On comprend en effet que, une pièce en alliage d'aluminium ne peut pas être soudée simplement sur une pièce en acier par fusion des deux matériaux. Grâce à la méthode de montage selon invention, il est alors possible sur une même chaîne d'assemblage de véhicules automobiles, de monter tout à la fois des éléments structurels en acier sur des caisses de carrosserie en acier, mais aussi, avec les mêmes outils et sans aucune perturbation de la chaîne d'assemblage, des éléments structurels en alliage d'aluminium équipés d'au moins une pièce de montage en acier.

On observera que l'aluminium peut être soudé à de l'acier dans certaines circonstances par friction. Cela nécessite bien évidemment des équipements spécifiques.

Avantageusement, à l'étape a), on solidarise ladite au moins une pièce de montage latérale externe à ladite bordure latérale externe par rivetage. On utilise alors, selon une variante de réalisation, des rivets pleins. Selon une autre variante avantageuse, on met en oeuvre des rivets autoperceur, et on s'affranchit ainsi d'une opération de perçage préalable.

Aussi, la pièce de montage latérale peut-être solidarisée à la bordure latérale externe selon un mode de soudure par friction.

En outre, selon un autre mode de réalisation, on solidarise ladite au moins une pièce de montage latérale externe à ladite bordure latérale externe par boulonnage. Dans certains cas, un tel mode de réalisation est préféré.

Aussi, et selon un mode de mise en oeuvre de l'invention particulièrement avantageux, à l'étape a), on fournit en outre au moins une pièce de montage latérale interne en acier, et on solidarise ladite au moins une pièce de montage latérale interne à ladite bordure latérale interne pour pouvoir souder à l'étape b), ladite au moins une pièce de montage latérale interne avec ledit un desdits longerons. Ainsi, et de manière analogue à la bordure latérale externe, on solidarise la pièce de montage latérale interne en acier à la bordure latérale interne de l'élément structurel, soit par rivetage ou par boulonnage, de manière à pouvoir ensuite souder la pièce de montage latérale interne sur le longeron correspondant. La pièce de montage latérale interne est également soudée sur le longeron par les moyens usuels de soudure de la chaîne de montage.

Selon l'invention, à l'étape a), on fournit en outre au moins une pièce de montage transversale en acier, et on solidarise ladite au moins une pièce de montage transversale audit sommet dudit élément structurel pour pouvoir souder à l'étape b), ladite au moins une pièce de montage transversale avec ledit tablier. Comme pour les pièces de montage latérales, on solidarise la pièce de montage transversale par rivetage ou boulonnage sur l'élément structurel en alliage d'aluminium, et on soude ensuite la pièce de montage transversale au tablier par les moyens usuels de soudure.

Au surplus, à l'étape a), on fournit de préférence un autre élément structurel réalisé en alliage d'aluminium et comportant, d'une part un autre sommet formant coupelle d'amortisseur, et d'autre part une autre bordure latérale interne et à l'opposé, une autre bordure latérale externe surélevée par rapport à ladite autre bordure latérale interne, tandis qu'à l'étape b) on adosse ledit autre élément structurel audit tablier, et on relie respectivement ensemble, ladite autre bordure latérale externe avec l'autre desdites ailes avant et ladite autre bordure latérale interne avec l'autre desdits longerons correspondant. On monte ainsi deux éléments structurels en alliage d'aluminium dans la caisse de carrosserie du véhicule automobile, symétriquement l'un de l'autre par rapport à un plan médian. Partant, le poids de l'alliage d'aluminium étant plus faible que celui de l'acier, on allège significativement la caisse de carrosserie.

Aussi, à l'étape a), on fournit en outre et de manière avantageuse, au moins une autre pièce de montage latérale externe en acier, et on solidarise ladite au moins une autre pièce de montage latérale externe à ladite autre bordure latérale externe pour pouvoir souder à l'étape b), ladite au moins une autre pièce de montage latérale externe avec ladite autre desdites ailes avant. L'autre pièce de montage latérale externe est solidarisée à l'autre bordure latérale externe par rivetage ou bien encore par boulonnage. Au surplus, à l'étape a), on fournit en outre au moins une pièce de montage latérale interne en acier, et on solidarise ladite au moins une pièce de montage latérale interne à ladite autre bordure latérale interne pour pouvoir souder à l'étape b), ladite au moins une autre pièce de montage latérale interne avec l'autre desdits longerons.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est une vue schématique partielle de dessus d'une partie avant de caisse de carrosserie ;
- la figure 2 est une vue schématique partielle en perspective de trois quarts avant droit de la partie avant de caisse de carrosserie représentée sur la figure 1 ;
- la figure 3 est une vue schématique en perspective d'un élément illustré sur la figure 2 ; et,
- la figure 4 est une vue schématique en perspective éclatée de l'élément représenté sur la figure 3.

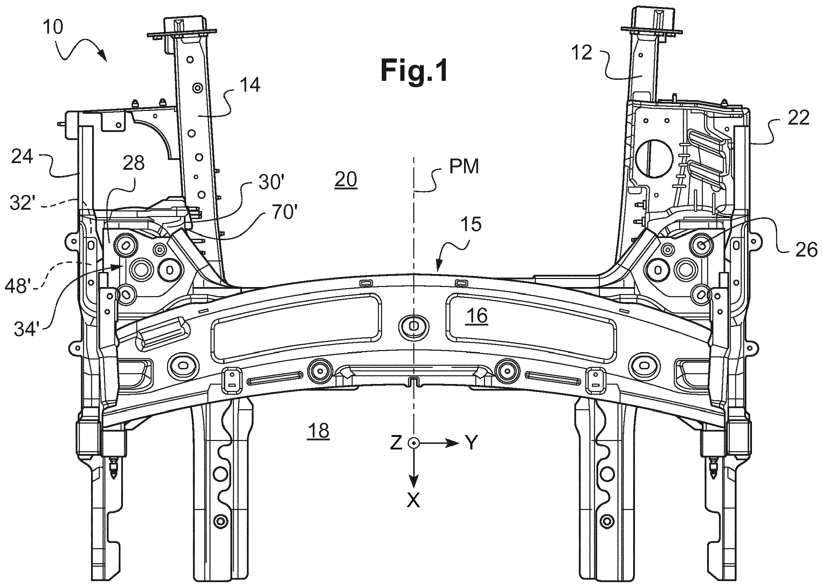

La figure 1 montre en vue de dessus et partiellement, une partie avant 10 d'une caisse de carrosserie d'un véhicule automobile. Elle comprend deux longerons parallèles en acier s'étendant longitudinalement, un longeron droit 12 et un longeron gauche 14. Elle comporte également un tablier 15 s'étendant transversalement et que les longerons 12, 14 traversent. Le tablier 15 présente un dessus de tablier 16 et il sépare l'habitacle 18 du compartiment moteur 20. Aussi, la partie avant 10 comporte deux ailes latérales en acier, une aile droite 22, et une aile gauche 24, s'étendant respectivement au voisinage des longerons droits 12 et gauche 14, et sensiblement parallèlement à ceux-ci. La partie avant 10 comprend également deux éléments structurels avant, un élément structurel avant droit 26 est un élément structurel avant gauche 28. Les éléments structurels avant 26, 28 sont respectivement adossés au tablier 15. L'élément structurel avant droit 26 est relié au longeron droit 12 et à l'aile droite 22, tandis que l'élément structurel avant gauche 28 est relié au longeron gauche 14 et à l'aile gauche 24. On expliquera plus en détail le mode de liaison dans la suite de la description.

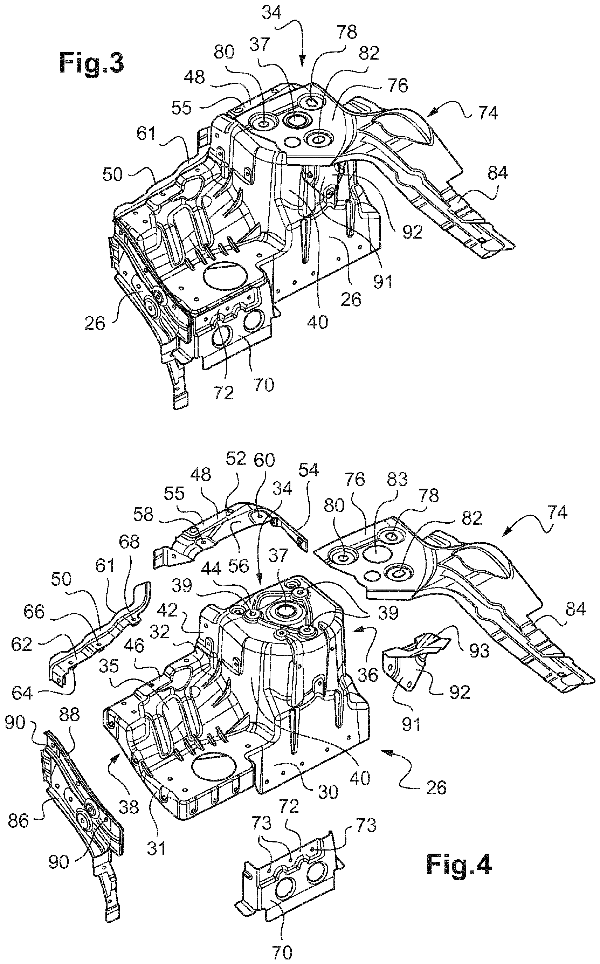

On se reportera sur la figure 4, montrant en détail l'élément structurel avant droit 26. Il est réalisé dans un alliage d'aluminium incluant par exemple du magnésium. Il comprend une bordure latérale interne 30 et à l'opposé une bordure latérale externe 32, surélevée par rapport à la bordure latérale interne 30. On observera que la bordure interne 30 s'étend en formant jupe et que la bordure externe 32 s'étend de façon sensiblement perpendiculaire à la bordure interne 30. En outre, l'élément structurel avant droit 26 présente, d'une part un sommet 34 situé vers l'arrière et destiné à former coupelle d'amortisseur, et d'autre part, vers l'avant, une partie antérieure 35. Aussi, l'élément structurel avant droit 26 présente une face postérieure 36 opposée à une face antérieure 38. Aussi, la bordure interne 30 se prolonge par une bordure antérieure 31 et qui s'étend sur la face antérieure 38 en formant jupe. En outre, l'élément structurel avant droit 26 est adapté à être installé au-dessus du passage de roue avant droit de véhicule automobile. On observera que la paroi du sommet 34 est sensiblement plane qu'elle présente une lumière circulaire centrale 37 et trois perçages 39 agencés autour.

Entre la partie antérieure 35 et le sommet 34 de l'élément structurel 26, s'étend une rehausse 40. Aussi, la bordure externe 32 présente un décrochement 42 entre une bordure externe supérieure 44 bordant le sommet 34 et une bordure externe inférieure 46 bordant la partie antérieure 35.

Conformément à la méthode de montage selon l'invention, on fournit deux pièces de montage latérales externes en acier, l'une supérieure 48 l'autre inférieure 50. La pièce de montage latérale externe supérieure 48 présente une partie longitudinale 52 s'étendant selon un plan moyen et une partie en retour 54. La partie longitudinale 52 présente une bordure supérieure de fixation 55 et une bordure supérieure de fixation 56 dans laquelle est pratiquée deux orifices supérieurs de fixation 58, 60. La pièce de montage latérale externe inférieure 50 est une cornière présentant une aile libre 61 et une aile inférieure de fixation 62 dans laquelle sont pratiqués trois orifices inférieurs de fixation 64, 66, et 68.

Préférentiellement, on fournit également une pièce de montage latérale interne en acier 70 formant platine. Cette platine 70 présente une bordure supérieure interne de fixation 72 dans laquelle sont pratiqués des orifices supérieurs internes de fixation 73.

De surcroît, et de façon particulièrement avantageuse, on fournit en outre au moins une pièce de montage transversale en acier 74 sous forme de plaque et présentant, d'une part une tête de fixation plane 76 dans laquelle sont pratiqués trois orifices de fixation latéraux 78, 80, 82, et un évidement central 83, et d'autre part une queue 84 prolongeant la tête 76.

Aussi, on fournit de préférence une pièce de montage antérieur de fixation 86 laquelle présente une bordure de fixation antérieure supérieure 88 dans laquelle sont pratiqués des orifices de fixation antérieure supérieure 90.

Au surplus, on fournit une pièce de montage en équerre 92 présentant une aile de fixation triangulaire 91 et une aile de liaison 93 dont on expliquera ci-après la fonction. L'aile de fixation triangulaire 91 présente des perçages de fixation. La pièce de montage en équerre 92 est réalisée en acier.

On retrouve sur la figure 3, l'ensemble des pièces de montage décrites sur la figure 4, solidarisé à l'élément structurel avant droit 26.

Ainsi, la pièce de montage latérale externe supérieure 48 a été rendue solidaire de la bordure externe supérieure 44 par l'intermédiaire de sa bordure supérieure de fixation 56 grâce à des rivets pleins respectivement engagés à travers les deux orifices supérieurs de fixation 58, 60 et à travers la bordure externe supérieure 44. Par coopération de forme, la partie longitudinale 52 de la pièce de montage latérale externe supérieure 48 est appliquée parfaitement sur le sommet 34 de l'élément structurel avant droit 26, tandis que la partie en retour 54 vient s'appliquer au sommet sur la face postérieure 36.

Aussi, la tête de fixation plane 76 de la pièce de montage transversal 74 vient coopérer avec le sommet 34 de l'élément structurel avant droit 26 et s'y applique en chevauchant la bordure supérieure de fixation 56 de la pièce de montage latérale externe supérieure 48. La tête de fixation plane 76 est alors solidarisée du sommet 34 de l'élément structurel avant droit 26 au moyen de rivets pleins engagés à travers les trois orifices de fixation latéraux 78, 80 et, 82 et respectivement à travers les trois perçages 39 de la paroi du sommet 34. L'évidement central 83 laisse apparaître totalement la lumière circulaire centrale 37. La queue 84 s'étend ainsi transversalement par rapport à l'élément structurel avant droit 26.

Aussi, dans le but d'augmenter la rigidité de la liaison entre la pièce de montage transversal 74 et l'élément structurel avant droit 26, la pièce en équerre 92 est installée entre une partie de la queue 84 contiguë à la tête 76 et la rehausse 40. L'aile de liaison 93 est soudée sous la queue 84, tandis que l'aile de fixation triangulaire 91 est rivetée sur la rehausse 40.

En outre, la pièce de montage latérale externe inférieure 50 est rendue solidaire de la bordure externe inférieure 46 par l'intermédiaire de son aile libre 61 qui vient s'appliquer parfaitement par coopération de forme sous la bordure externe inférieure 46. L'aile libre 61 et la bordure externe inférieure 46 sont alors reliées ensemble par rivetage à travers l'orifice inférieur de fixation 64, 66, 68.

De la même façon, et à l'opposé, la pièce de montage latérale interne en acier 70 formant platine est rendue solidaire de la bordure interne 30 par l'intermédiaire de sa bordure supérieure interne de fixation 72 grâce a des rivets pleins engagés à travers les orifices supérieurs internes de fixation 73 et à travers la bordure interne 30.

Enfin, et de la même manière, la pièce de montage antérieur de fixation 86 est rivetée, par l'intermédiaire de sa bordure de fixation antérieure supérieure 88 qui vient s'appliquer contre la bordure antérieure 31.

De la sorte, on obtient un élément structurel avant droit 26 en alliage d'aluminium équipé tout autour de pièces de montage en acier 48, 50, 70, 74, 86, 92 permettant une liaison par soudure de manière usuelle avec l'environnement de la partie avant 10 de caisse de carrosserie de véhicule automobile. L'élément structurel avant droit 26 ainsi équipé est totalement analogue à un élément structurel avant droit réalisé totalement en acier et il peut ainsi être intégré dans un magasin d'une chaîne de montage de manière à pouvoir être installé lorsque nécessaire sur certains modèles de la chaîne de montage.

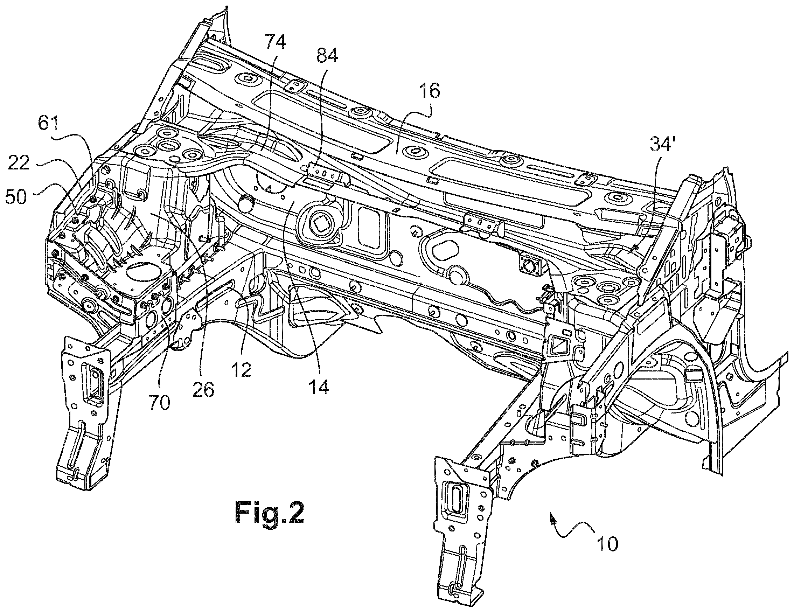

On se reportera à la figure 2 sur laquelle on retrouve, vu de trois quarts avant droit, la partie avant 10 de caisse de carrosserie de véhicule automobile. On y retrouve également le tablier 15 surmonté du dessus de tablier 16. L'élément structurel avant droit 26 est alors installé entre le longeron avant droit 12 et l'aile droite 22 et adossée au tablier 15.

Aussi, grâce aux moyens de soudage usuels conventionnels, l'aile libre 61 de la pièce de montage latérale externe inférieure 50 en acier a été soudée contre la paroi interne en acier également de l'aile 22. La bordure de fixation 55 de la partie longitudinale 52 de la pièce de montage latérale externe supérieur 58 a été également soudée contre le bord supérieur de l'aile avant droite 22. À l'opposé, la pièce de montage latérale interne en acier 70 formant platine a été soudé sur le longeron avant droit 12. Aussi, la queue 84 de la pièce de montage transversal 74 a été soudée le long du tablier 15.

Afin de parfaire la fixation de l'élément structurel avant droit 26, sa bordure interne 30 est également reliée partiellement par boulonnage au longeron 12.

De la même façon, l'élément structurel avant gauche 28, symétrique de l'élément structurel avant droit 26 par rapport à un plan médian que l'on retrouve sur la figure 1, est relié à l'aile avant gauche 24, au longeron 14 et au tablier 15 au moyen de pièces de montage en acier, lorsqu'il est réalisé en alliage d'aluminium. Ces pièces de montage en acier sont sensiblement identiques aux pièces de montage mises en oeuvre pour l'élément structurel avant droit 26 aux modifications structurelles près dues à l'environnement immédiat.

Ainsi, l'élément structurel avant gauche 28, représenté sur la Figure 1, est réalisé en alliage d'aluminium et il comporte également un sommet 34' formant coupelle d'amortisseur. Les parties de l'élément structurel avant gauche 28, communes à celles de l'élément structurel avant droit 26, présentent ainsi la même référence affectée d'un signe «'».

Aussi, l'élément structurel avant gauche 28 comprend une autre bordure latérale interne 30' et à l'opposé, une autre bordure latérale externe 32'. Conformément à la méthode de montage selon l'invention, l'élément structurel avant gauche 28 est adossé audit tablier 15, et l'autre bordure latérale externe 32' est reliée avec l'aile avant gauche 24, tandis que l'autre bordure latérale interne 30' est reliée au longeron gauche 14.

Pour ce faire, on fournit également une autre pièce de montage latérale externe en acier 48', masquée sur la figure 1 par le rebord de l'aile avant gauche 24. Et cette autre pièce de montage latérale externe en acier 48' est solidarisée à l'autre bordure latérale externe 32' pour pouvoir ensuite être soudée à l'aile avant gauche 28. L'autre pièce de montage latérale externe 48' est solidarisée à l'autre bordure latérale externe 32' par rivetage ou bien encore par boulonnage.

En outre, on fournit une pièce de montage latérale interne en acier 70' et elle est solidarisée à l'autre bordure latérale interne 30' pour pouvoir la souder au longeron gauche 14.

De la même façon, on fournit une autre pièce de montage transversale en acier 74' que l'on solidarise au sommet 34' de l'élément structurel avant gauche 28 pour pouvoir la souder au tablier 15.

Aussi, l'objet de l'invention concerne également un élément structurel avant de caisse de carrosserie de véhicule automobile réalisé en alliage d'aluminium, et destiné à être mis en oeuvre selon une méthode de montage telle que décrite ci-dessus. Partant, élément structurel avant présente deux pièces de montage latérales externes en acier 48, 50, une pièce de montage latérale interne en acier 70 formant platine, et une pièce de montage transversale en acier 74. Et de préférence, l'élément structurel avant présente également une pièce de montage en équerre 92 et une pièce de montage antérieur de fixation 86.

## Revendications

1. Méthode de montage d'élément structurel avant de caisse de carrosserie de véhicule automobile, ladite caisse de carrosserie comportant, d'une part un compartiment moteur (20) délimité transversalement par un tablier (15) et latéralement par deux ailes avant en acier (22, 24), et d'autre part deux longerons en acier (12, 14) s'étendant longitudinalement à l'intérieur dudit compartiment moteur (20) respectivement au voisinage desdites ailes (22, 24), ladite méthode comprenant les étapes suivantes :
- a) on fournit un élément structurel (26, 28) réalisé en alliage d'aluminium et comportant, d'une part un sommet (34 ; 34') formant coupelle d'amortisseur, et d'autre part une bordure latérale interne (30, 30') et à l'opposé, une bordure latérale externe (32, 32') surélevée par rapport à ladite bordure latérale interne, on fournit en outre au moins une pièce de montage latérale externe en acier (48, 50), et on solidarise ladite au moins une pièce de montage latérale externe (48, 50) à ladite bordure latérale externe (32) ;
- b), tandis qu'on relie respectivement ensemble, ladite bordure latérale externe (32, 32') avec l'une desdites ailes avant (22, 24) en soudant ladite au moins une pièce de montage latérale externe (48, 50) avec ladite une desdites ailes avant (22, 24), et ladite bordure latérale interne (30, 30') avec l'un desdits longerons correspondant (12, 14) ;
**caractérisée en ce qu'**à l'étape a), on fournit en outre au moins une pièce de montage transversale en acier (74), et on solidarise ladite au moins une pièce de montage transversale (74) audit sommet (34) dudit élément structurel (26, 28) pour pouvoir à l'étape b), adosser ledit élément structurel (26, 28) audit tablier (15), et souder ladite au moins une pièce de montage transversale (74) avec ledit tablier (15).

2. Méthode de montage selon la revendication 1, **caractérisé en ce qu'**à l'étape a), on solidarise ladite au moins une pièce de montage latérale externe (48, 50) à ladite bordure latérale externe (32) par rivetage.

3. Méthode de montage selon la revendication 1, **caractérisé en ce qu'**à l'étape a), on solidarise ladite au moins une pièce de montage latérale externe (48, 50) à ladite bordure latérale externe (32) par boulonnage.

4. Méthode de montage selon l'une quelconque des revendications 1 à 3, **caractérisé en ce qu'**à l'étape a), on fournit en outre au moins une pièce de montage latérale interne en acier (70) et on solidarise ladite au moins une pièce de montage latérale interne (70) à ladite bordure latérale interne (30) pour pouvoir souder à l'étape b), ladite au moins une pièce de montage latérale interne (70) avec ledit un desdits longerons (12).

5. Méthode de montage selon l'une quelconque des revendications 1 à 4, **caractérisé en ce qu'**à l'étape a), on fournit un autre élément structurel (28) réalisé en alliage d'aluminium et comportant, d'une part un autre sommet (34') formant coupelle d'amortisseur, et d'autre part une autre bordure latérale interne (30') et à l'opposé, une autre bordure latérale externe (32') surélevée par rapport à ladite autre bordure latérale interne (30'), tandis qu'à l'étape b) on adosse ledit autre élément structurel (28) audit tablier (15), et on relie respectivement ensemble, ladite autre bordure latérale externe (32') avec l'autre desdites ailes avant (24) et ladite autre bordure latérale interne (30') avec l'autre desdits longerons correspondant (14).

6. Méthode de montage selon la revendication 5, **caractérisé en ce qu'**à l'étape a), on fournit en outre au moins une autre pièce de montage latérale externe en acier (48'), et on solidarise ladite au moins une autre pièce de montage latérale externe (48') à ladite autre bordure latérale externe (32') pour pouvoir souder à l'étape b), ladite au moins une autre pièce de montage latérale externe (48') avec ladite autre desdites ailes avant (24).

7. Méthode de montage selon la revendications 6, **caractérisé en ce qu'**à l'étape a), on fournit en outre au moins une pièce de montage latérale interne en acier (70'), et on solidarise ladite au moins une pièce de montage latérale interne (70') à ladite autre bordure latérale interne (30') pour pouvoir souder à l'étape b), ladite au moins une autre pièce de montage latérale interne (70') avec l'autre desdits longerons (14).

## Patentansprüche

1. Verfahren zur Montage eines vorderen Strukturelements einer Rohkarosserie eines Kraftfahrzeugs, wobei die Rohkarosserie einerseits einen Motorraum (20), der transversal durch eine Spritzwand (15) und seitlich durch zwei vordere Kotflügel aus Stahl (22, 24) begrenzt wird, und andererseits zwei Längsträger aus Stahl (12, 14), die sich längs im Inneren des Motorraums (20) jeweils in der Nähe der Kotflügel (22, 24) erstrecken, umfasst, wobei das Verfahren die folgenden Schritte beinhaltet:
- a) Bereitstellen eines Strukturelements (26, 28), das aus einer Aluminiumlegierung hergestellt ist und einerseits eine Spitze (34; 34'), die eine Stoßdämpferschale bildet, und andererseits einen inneren Seitenrand (30, 30') und, gegenüberliegend, einen äußeren Seitenrand (32, 32'), der in Bezug auf den inneren Seitenrand höher liegt, umfasst, ferner Bereitstellen mindestens eines äußeren Seitenmontageteils aus Stahl (48, 50) und festes Verbinden des mindestens einen äußeren Seitenmontageteils (48, 50) mit dem äußeren Seitenrand (32);
- b), während jeweils der äußere Seitenrand (32, 32') mit einem der vorderen Kotflügel (22, 24) durch Schweißen des mindestens einen äußeren Seitenmontageteils (48, 50) an den einen der vorderen Kotflügel (22, 24) bzw. der innere Seitenrand (30, 30') mit einem entsprechenden der Träger (12, 14) verbunden wird;
**dadurch gekennzeichnet, dass** in Schritt a) ferner mindestens ein transversales Montageteil aus Stahl (74) bereitgestellt wird und das mindestens eine transversale Montageteil (74) mit der Spitze (34) des Strukturelements (26, 28) fest verbunden wird, um in Schritt b) das Strukturelement (26, 28) an die Spritzwand (15) anfügen zu können und das mindestens eine transversale Montageteil (74) an die Spritzwand (15) schweißen zu können.

2. Montageverfahren nach Anspruch 1, **dadurch gekennzeichnet, dass** in Schritt a) das mindestens eine äußere Seitenmontageteil (48, 50) durch Vernieten fest mit dem äußeren Seitenrand (32) verbunden wird.

3. Montageverfahren nach Anspruch 1, **dadurch gekennzeichnet, dass** in Schritt a) das mindestens eine äußere Seitenmontageteil (48, 50) durch Verschrauben fest mit dem äußeren Seitenrand (32) verbunden wird.

4. Montageverfahren nach einem beliebigen der Ansprüche 1 bis 3, **dadurch gekennzeichnet, dass** in Schritt a) ferner mindestens ein inneres Seitenmontageteil aus Stahl (70) bereitgestellt wird und das mindestens eine innere Seitenmontageteil (70) mit dem inneren Seitenrand (30) fest verbunden wird, um in Schritt b) das mindestens eine innere Seitenmontageteil (70) an den einen der Träger (12) schweißen zu können.

5. Montageverfahren nach einem beliebigen der Ansprüche 1 bis 4, **dadurch gekennzeichnet, dass** in Schritt a) ein anderes Strukturelement (28) bereitgestellt wird, das aus einer Aluminiumlegierung hergestellt ist und einerseits eine andere Spitze (34'), die eine Stoßdämpferschale bildet, und andererseits einen anderen inneren Seitenrand (30') und, gegenüberliegend, einen anderen äußeren Seitenrand (32'), der in Bezug auf den anderen inneren Seitenrand (30') höher liegt, umfasst, während in Schritt b) das andere Strukturelement (28) an die Spritzwand (15) angefügt wird und jeweils der andere äußere Seitenrand (32') mit dem anderen der vorderen Kotflügel (24) bzw. der andere innere Seitenrand (30') mit dem entsprechenden anderen der Träger (14) verbunden wird.

6. Montageverfahren nach Anspruch 5, **dadurch gekennzeichnet, dass** in Schritt a) ferner mindestens ein anderes äußeres Seitenmontageteil aus Stahl (48') bereitgestellt wird und das mindestens eine andere äußere Seitenmontageteil (48') mit dem anderen äußeren Seitenrand (32') fest verbunden wird, um in Schritt b) das mindestens eine andere äußere Seitenmontageteil (48') an den anderen der vorderen Kotflügel (24) schweißen zu können.

7. Montageverfahren nach Anspruch 6, **dadurch gekennzeichnet, dass** in Schritt a) ferner mindestens ein inneres Seitenmontageteil aus Stahl (70') bereitgestellt wird und das mindestens eine innere Seitenmontageteil (70') mit dem anderen inneren Seitenrand (30') fest verbunden wird, um in Schritt b) das mindestens eine andere innere Seitenmontageteil (70') an den anderen der Träger (14) schweißen zu können.

## Claims

1. Method for assembling a front structural element of a motor vehicle body shell, said body shell having firstly an engine compartment (20) delimited transversely by a bulkhead (15) and laterally by two steel front wings (22, 24), and secondly two steel side rails (12, 14) extending longitudinally inside said engine compartment (20) in proximity to said wings (22, 24) respectively, said method comprising the following steps:
- a) providing a structural element (26, 28) made of aluminium alloy and having firstly a top (34; 34'), forming a suspension housing, and secondly an internal lateral edge (30, 30') and, on the opposite side, an external lateral edge (32, 32') that is raised in relation to said internal lateral edge, furthermore providing at least one steel external lateral assembly part (48, 50), and securing said at least one external lateral assembly part (48, 50) to said external lateral edge (32);
- b) while respectively connecting together said external lateral edge (32, 32') with one of said front wings (22, 24) by welding said at least one external lateral assembly part (48, 50) to said one of said front wings (22, 24), and said internal lateral edge (30, 30') with the corresponding one of said side rails (12, 14); **characterized in that** step a) involves furthermore providing at least one steel transverse assembly part (74) and securing said at least one transverse assembly part (74) to said top (34) of said structural element (26, 28) in order to be able, in step b), to bring said structural element (26, 28) into contact with said bulkhead (15) and to weld said at least one transverse assembly part (74) to said bulkhead (15).

2. Assembly method according to Claim 1, **characterized in that** step a) involves securing said at least one external lateral assembly part (48, 50) to said external lateral edge (32) by riveting.

3. Assembly method according to Claim 1, **characterized in that** step a) involves securing said at least one external lateral assembly part (48, 50) to said external lateral edge (32) by bolting.

4. Assembly method according to any one of Claims 1 to 3, **characterized in that** step a) involves furthermore providing at least one steel internal lateral assembly part (70) and securing said at least one internal lateral assembly part (70) to said internal lateral edge (30) in order to be able to weld, in step b), said at least one internal lateral assembly part (70) to said one of said side rails (12).

5. Assembly method according to any one of Claims 1 to 4, **characterized in that** step a) involves providing another structural element (28) made of aluminium alloy and having firstly another top (34'), forming a suspension housing, and secondly another internal lateral edge (30') and, on the opposite side, another external lateral edge (32') that is raised in relation to said other internal lateral edge (30'), while step b) involves bringing said other structural element (28) into contact with said bulkhead (15), and respectively connecting together said other external lateral edge (32') with the other of said front wings (24) and said other internal lateral edge (30') with the corresponding other of said side rails (14).

6. Assembly method according to Claim 5, **characterized in that** step a) involves furthermore providing at least one other steel external lateral assembly part (48') and securing said at least one other external lateral assembly part (48') to said other external lateral edge (32') in order to be able to weld, in step b), said at least one other external lateral assembly part (48') to said other of said front wings (24).

7. Assembly method according to Claim 6, **characterized in that** step a) involves furthermore providing at least one steel internal lateral assembly part (70'), and securing said at least one internal lateral assembly part (70') to said other internal lateral edge (30') in order to be able to weld, in step b), said at least one other internal lateral assembly part (70') to the other of said side rails (14).
